# EUROPÄISCHE PATENTANMELDUNG

(11) **EP 4 586 464 A1**
(43) Veröffentlichungstag der Anmeldung: **16.07.2025**
(21) Anmeldenummer: 24215459.9
(22) Anmeldetag: 26.11.2024
(51) Int. Cl.: H02K 1/14, H02K 3/18, H02K 9/06, H02K 1/20, H02K 3/24, H02K 5/15, H02K 7/14, H02K 9/197

(54) **ELEKTRISCHE MASCHINE MIT JOCHWICKLUNG**

(30) Priorität: 09.01.2024 EP 24150908
(71) Anmelder: C. & E. Fein GmbH, 73529 Schwäbisch Gmünd-Bargau (DE)
(72) Erfinder: Mayer, Bernd, 73479 Ellwangen (DE)
(74) Vertreter: Kirchner, Christian

(57) **Zusammenfassung**

Die Erfindung betrifft eine elektrische Maschine, insbesondere einen Elektromotor, mit gekapseltem magnetischen Luftspalt und mit Bewicklung des Rückschlussrings des Stators anstelle der Polschuhe. Die Erfindung betrifft auch ein Verfahren zur Herstellung der elektrischen Maschine.

## Beschreibung

Die vorliegende Erfindung bezieht sich auf eine elektrische Maschine mit toroidaler Bewicklung des Stator-Rückschlusses (Jochwicklung), insbesondere auf eine bürstenlose elektrische Maschine.

Bürstenlose Motoren gehören zum Stand der Technik. Zu ihnen zählen die weit verbreiteten Asynchronmotoren und die vorwiegend permanentmagneterregten Synchronmotoren, welche aufgrund ihrer hohen Leistungsdichte auch in Elektrowerkzeugen mehr und mehr Verwendung finden.

Elektrowerkzeuge transportieren hohe Dauerleistungen, weshalb der Motor und die Leistungshalbleiter der Elektronik gekühlt werden müssen. Das bevorzugte Kühlmedium ist die Umgebungsluft, welche aber infolge des meist mechanischen Bearbeitungsprozesses der Elektrowerkzeuge, staubhaltig ist. Ein Kompromiss zwischen Kühlung und Staubresistenz kann durch unterschiedliche Staubfilter oder durch Komponenten mit geeigneter Kapselung erreicht werden. Speziell bei der Metallbearbeitung entstehen elektrisch und magnetisch leitfähige Stäube. Winkelschleifer erzeugen dabei besonders feinkörnigen Staub. Doch auch mineralische oder organische Stäube (Holz) können die Kühlluftpfade im Inneren der Maschine zusetzen. Die staubhaltige Umgebungsluft stellt also eine die Einsatzdauer begrenzende Störgröße dar. Reparatur- und Wartungsbedarf sind die Folge.

Für bürstenlose Antriebe ist der magnetische Luftspalt zwischen Rotor und Stator durch die offenen Pole im Magnetkreis die staubkritische Zone, welche es zu kapseln gilt.

Bekannte Konstruktionen kapseln den kompletten Motor. Dadurch wird auch die besonders verlustbehaftete Statorwicklung mit gekapselt und es entsteht ein Nachteil gegenüber Konstruktionen, bei denen nur der Luftspalt von der Kühlluft separiert ist. Solche Konstruktionen nutzen Abdichtungen des Luftspaltes durch Spritzguss bzw. durch eingeschobene Keile in den Nuten. Speziell für Winkelschleifer hat sich die Strategie der gekapselten Antriebskomponenten bewährt.

Es gibt verschiedene Strategien, mit dem Staub der Umgebungsluft umzugehen. Dieser entsteht häufig, aber nicht ausschließlich im eigenen Bearbeitungsprozess. Es sind also auch Maschinen gefährdet, die selbst nur grobe Späne erzeugen, jedoch an Einsatzorten verwendet werden, an denen z.B. benachbarte Schleifarbeiten stattfinden. Die Problematik besteht deshalb nicht nur in Bezug auf Elektrowerkzeuge wie Winkelschleifer.

Im Gegensatz zur häufig angewendeten Strategie, den Staub mit Staubgittern aus dem Inneren der Maschine fern zu halten, wird dieser bisweilen auch durch möglichst große Spaltmaße an den gekapselten Komponenten vorbei geleitet.

Es gibt auch Ansätze, den Staub im Inneren der Maschine aus der Luft zu filtern und somit saubere Luft zur Kühlung ohne vollständige Kapselung zu verwenden (z.B. Zyklonprinzip), jedoch stellt gerade besonders feinkörniger Staub eine Gefahr dar und die oben erwähnten Ansätze wirken nur bei rotierendem Antrieb. Staub befindet sich aber auch bei ausgeschalteter Maschine im Inneren und dringt durch Lageänderungen in Öffnungen ein.

Unausweichlichen Stäuben mit endlicher Größe durch eine Kapselung der kritischen Systemelemente und möglichst ungehinderter Durchleitung bei bestmöglichem Wärmeaustausch mit den zu kühlenden Systemelementen zu begegnen, scheint eine zielführende technische Lösung zu sein.

Radialflussmotoren können unterteilt werden in Motoren mit Innen- oder Außenläufer. I nnenläufer haben dabei das größere Leistungspotenzial und passen häufig besser zu den Forderungen von Elektrowerkzeugen.

Aus der US 4,547,713 ist ein permanenterregter Synchronmotor mit toroidaler Bewicklung des Stators bekannt, welcher als reiner Ring ohne die Ausprägung von Nuten bzw. Zähnen ausgeführt wird. Dadurch wird die Breite des magnetischen Luftspaltes zwischen Rotor und Stator von der Bewicklung selbst nachteilig beeinfluss, da der Luftspalt mindestens so breit sein muss, wie die Wicklung auf der rotorzugewandten Seite des Stators aufbaut.

Die US 6,924,574 beschreibt ebenfalls einen toroidal gewickelten Radialflussmotor, der aber sowohl einen Innen- als auch einen Außenrotor besitzt. Der Statorring weist dazu Zähne nach innen und nach außen auf, wodurch der magnetische Luftspalt einerseits schmal gehalten werden kann und andererseits eine große Fläche aufspannt. Nachteilig ist, dass die Statorwicklung in ihrem Spalt zwischen beiden Rotoren nur schwer gekühlt werden kann und dass sich ein Staubschutz des magnetischen Luftspaltes infolge der allseitig bewegten Rotoren ebenfalls aufwändig gestaltet.

Aus der US 2014/0125155 ist ein geschalteter Reluktanzmotor bekannt, der mit einer Vielzahl von Spulen und einer Kommutierungseinrichtung zwei gegenphasige Statorfelder mit je 180° Teilung synchron rotieren lässt. Der Rotor richtet sich aufgrund seiner Reluktanz aus und das System bildet einen rotierenden Elektromagneten, dessen Drehmoment konstant ist und die Drehzahl durch die Umlaufgeschwindigkeit der beiden Statorfelder eingestellt werden kann.

Bei Statoren unterscheidet man zwischen solchen mit konzentrierten und solchen mit verteilten Wicklungen. Im Zusammenhang mit der elektronischen Ansteuerung ergeben sich vielfältige Gestaltungsvarianten, welche selbstverständlich auch Einfluss auf Kosten und Fertigungstechnik haben. Aufgrund der einfachen Herstellbarkeit sind konzentrierte Wicklungen der Standard bei Elektrowerkzeugen.

In der vorliegenden Erfindung geht es vorrangig um den Stator und seine Wicklung. Ein klassischer Stator besteht aus den Zähnen (Polschuhen) und ihren Zahnzwischenräumen, den Nuten. Die Wicklungen werden klassischer Weise auf die Zähne aufgebracht. Für einen hohen Wirkungsgrad werden dabei viele Amperewindungen (hohe Windungszahl bei möglichst dickem Draht) benötigt. Entsprechend müssen die Nuten bestmöglich mit Kupfer gefüllt werden. Man bewertet auch den sog. Nutfüllfaktor für eine Abschätzung des Wirkungsgrades. Gleichzeitig sind die größten Verluste unter Last im Kupfer selbst, wodurch dieses auch bestmöglich von der Kühlluft umströmt werden soll. Diese beiden Forderungen widersprechen sich, da in der Nut nur entweder viel Kupfer oder viel Querschnitt zur Kühlung sein kann.

Nadelwickler für konzentrierte Wicklungen erreichen aber weder hohe Nutfüllfaktoren noch hinterlassen sie (aufgrund begrenzter Drahtzugspannung und damit aufbauchender Wicklungen) viel Querschnitt zur Durchzugbelüftung. Eine Optimierung der geometrischen Parameter ist auch im Widerspruch zwischen einem möglichst großen Luftspaltdurchmesser und einem hohen Nutfüllfaktor, da eine hohe Zahl von Amperewindungen meist einen hohen Bedarf an radialem Bauraum erfordert und bei konstantem Radius des Rotors der Querschnitt des Luftspaltes zur Belüftung reduziert ist.

Im Falle einer Einzelzahnbewicklung ist es möglich präzise eng aneinander anliegende Wicklungen herzustellen, und somit einen hohen Nutfüllfaktor zu erzielen. Die Konkurrenz zwischen hohem Nutfüllfaktor und hohem Querschnitt zur Durchzugbelüftung bleibt aber bestehen.

Der Erfindung liegt deshalb die Aufgabe zugrunde, eine elektrische Maschine mit verbesserter Wicklungskühlung bereitzustellen.

Die Erfindung löst diese Aufgabe durch eine elektrische Maschine gemäß Patentanspruch 1 oder 2 und ein Verfahren zu deren Herstellung gemäß Patentanspruch 16. Bevorzugte Ausgestaltungen der Erfindung sind Gegenstände der abhängigen Ansprüche und ergeben sich zudem aus der weiteren Beschreibung der Erfindung.

Die Erfindung bezieht sich unter anderem auf eine elektrische Maschine, mit einem EC-Motor, aufweisend
einen Stator, mit einem um eine axiale Richtung A konzentrisch umlaufenden magnetischen Rückschlussring, der an einer konzentrisch verlaufenden ersten Seite mehrere Polschuhe aufweist, die einen konzentrisch verlaufenden, zylinder- oder hohlzylinderförmigen Rotoraufnahmeraum begrenzen,
einen Rotor, der konzentrisch zum Stator im Rotoraufnahmeraum angeordnet ist,
einen Kühlmittelströmungsraum, der in axialer Richtung entlang einer zweiten Seite des Rückschlussrings verläuft, welche der ersten Seite gegenüberliegt, und
wobei der Stator, mehrere, einen Leiterdraht aufweisende Wicklungen aufweist, die jeweils um einen axial verlaufenden Segmentabschnitt des Rückschlussrings gewickelt sind und die an den Kühlmittelströmungsraum angrenzen.

Die erfindungsgemäße elektrische Maschine weist den Vorteil auf, dass die Statorwicklungen wenigstens teilweise direkt in dem Kühlluftstrom des Kühlmittelströmungsraums angeordnet sind. Auf diese Weise werden die Wicklungen effizient gekühlt. Der Luftspalt zwischen Rotor und Stator kann durch Dichtungsmittel, insbesondere Abdeckungen, die an den axialen Enden von Stator und Rotor angebracht sind, effizient gegen Staubeindringen geschützt werden. Der im Stand der Technik durch die Zahnbewicklung bestehende Widerspruch zwischen Nutfüllfaktor und Kühlluftstrom wird durch die Erfindung aufgehoben.

Vorteilhaft ist zudem, dass gegenüber Maschinen mit der klassischen Zahnbewicklung der Durchmesser des zylindermantelförmigen magnetischen Luftspaltes, gemessen in Bezug auf den durch die Achse A gegebenen Mittelpunkt M, vergrößert werden kann, da die Zähne nur zur Leitung des magnetischen Flusses, nicht aber für die Einrichtung der Wicklungen oder als Kühlzwischenräume benötigt werden.

Als weiterer Vorteil wurde ermittelt, dass der Rotor in seiner Eigenschaft als mechanischer Energiespeicher im Durchmesser vergrößert und dadurch seine Leistungsfähigkeit verbessert werden kann. Die Energiespeicherung ist unterstützend für eine dynamische Leistungsabgabe bei Lastspitzen. Energie, die im Rotor als Drehimpuls gespeichert ist, kann am mechanischen Abtrieb unverzüglich abgerufen werden. Elektrische Energiespeicher hingegen müssen erst durch Regler (z.B. Software) abgerufen und durch das elektromagnetische System gewandelt werden (Latenz). Zudem müssen sie um den Faktor (1 / Wirkungsgrad) der elektromagnetischen Wandlung größer ausgeführt werden als ein mechanischer Energiespeicher. Die Leistungsfähigkeit vieler Elektrowerkzeugarten beruht auf der mechanischen Energiespeicherung in den rotierenden Teilen.

Gemäß einer ersten beanspruchten Ausführungsform ist zwischen den Polschuhen und dem Rotor ein Luftspalt ausgebildet, der insbesondere zylindermantelförmig ist und insbesondere konzentrisch zur Achse A verläuft. Die elektrische Maschine dieser Ausführungsform weist mindestens ein Abdichtmittel zum Abdichten des Luftspaltes auf.

Abgesehen von der ersten beanspruchten Ausführungsform ist auch bei anderen Ausführungsformen einer erfindungsgemäßen elektrischen Maschine vorzugsweise vorgesehen, dass zwischen den Polschuhen und dem Rotor ein Luftspalt ausgebildet ist. Vorzugsweise weisen solche elektrische Maschinen mindestens ein Abdichtmittel zum Abdichten des Luftspaltes auf.

Das Abdichtmittel ist vorzugsweise mindestens eine Abdeckung, die am in axialer Richtung gelegenen Ende des Stators und des Rotors angeordnet ist, insbesondere an beiden Enden. Die Abdeckung kann mindestens ein Deckelelement beinhalten. Die Abdeckung erstreckt sich, im Falle der als Innenläufer ausgebildeten elektrischen Maschine, in radialer Richtung zwischen der Achse (A) und der zweiten Seite des Rückschlussrings und greift vorzugsweise nicht in den Kühlmittelströmungsraum ein. Die Abdeckung erstreckt sich, im Falle der als Außenläufer ausgebildeten elektrischen Maschine, in radialer Richtung zwischen der zweiten Seite des Rückschlussrings und der Außenseite des Rotors und greift vorzugsweise nicht in den innerhalb des Stators gelegenen Kühlmittelströmungsraum ein.

Gemäß einer zweiten beanspruchten Ausführungsform der erfindungsgemäßen elektrischen Maschine ragen die Wicklungen in den Kühlmittelströmungsraum hinein und sind von der zweiten Seite des Rückschlussrings in radialer Richtung beabstandet.

Durch diese Anordnung wird erreicht, dass die Wicklung selbst effizienter durch den vorbeifließenden Luftstrom gekühlt werden kann, was eine effektivere Ableitung der in der Wicklung entstehenden Verlustwärme ermöglicht. Gleichzeitig profitiert auch das verlustbehaftete Eisen des Rückschlussrings, d.h. des Jochs, von einer verbesserten Kühlung, da der Luftstrom, bedingt durch die räumliche Trennung zwischen Wicklung und der zweiten Seite des Jochs, ungehindert zirkulieren und die Wärme aus dem Joch ableiten kann.

Diese konstruktive Maßnahme stellt sicher, dass nicht nur die Wicklung, sondern auch der Rückschlussring über eine optimierte Luftkühlung verfügt. Der Abstand zwischen dem äußeren Rand des Rückschlussring an der zweiten Seite und der Wicklung ermöglicht es dem Luftstrom, den Rückschlussring zu umströmen und dabei die Wärmemenge abzutransportieren, die in dem eisenhaltigen Material entsteht.

Es wird vorgeschlagen, dass dieser Abstand zwischen der zweiten Seite des Jochs und der Wicklung, gemessen in radialer Richtung, mindestens 0.5 mm betragen sollte, vorzugsweise zwischen 1mm und 2 mm oder zwischen 1mm und 5 mm betragen sollte, um einen ausreichenden Luftdurchsatz und somit eine optimale Kühlung zu gewährleisten. Ein solcher Abstand sorgt dafür, dass die durch den Luftstrom erzeugte Kühlung gleichmäßig verteilt wird und sowohl die Wicklung als auch der Rückschlussring von einer verbesserten thermischen Entlastung profitieren.

Vorzugsweise wird die Wicklung in der zweiten beanspruchten Ausführungsform im Außenbereich, also in Richtung radial auswärts der zweiten Jochseite, so gestaltet, dass sie aufgespreizt bzw. aufgefächert ist, wodurch zwischen den einzelnen Wickeldrähten ein definierter Abstand entsteht. Dieser Abstand beträgt vorzugsweise mindestens 0,5 mm oder mehr, insbesondere zwischen 0,5 mm und 5,0 mm, was die thermischen Eigenschaften der Wicklung deutlich verbessert. Durch die Aufspreizung der Wicklung wird eine vergrößerte Oberfläche geschaffen, an der der vorbeiströmende Luftstrom entlangfließen kann. Diese erweiterte Oberfläche ermöglicht eine effizientere Wärmeabgabe, da der Luftstrom die entstehende Wärme besser von den Wicklungsdrähten ableiten kann.

Durch die Aufspreizung wird sichergestellt, dass der Luftstrom tiefer in die Wicklung eindringen kann und somit eine intensivere Kühlung erreicht wird. Der Abstand zwischen den Wickeldrähten führt außerdem dazu, dass die Drähte in radialer Richtung in einem bestimmten Winkel zueinander positioniert sind. Dies bewirkt nicht nur eine bessere Verteilung des Luftstroms über die gesamte Wicklung, sondern auch eine gleichmäßige Kühlung der Drähte. Der radiale Winkel, in dem die Wicklungsdrähte zueinander stehen, trägt zudem dazu bei, dass sich die Wärmeentwicklung nicht an einzelnen Stellen konzentriert, sondern gleichmäßig verteilt wird.

Im bevorzugten Fall, dass die elektrische Maschine als Innenläufer ausgebildet ist, ist der Kühlmittelströmungsraum vorzugsweise zwischen einer Umhüllung, insbesondere einem Gehäuse, der elektrischen Maschine, und der zweiten Seite des Rückschlussrings ausgebildet.

Das Gehäuse kann insbesondere ein Gehäuse oder Gehäuseabschnitt der Vorrichtung bzw. des Elektrowerkzeugs sein, welches die elektrische Maschine beinhaltet.

Vorzugsweise ist die elektrische Maschine als Außenläufer ausgebildet, wobei der Kühlmittelströmungsraum vorzugsweise im zylinderförmigen Hohlraum des Stators ausgebildet ist.

Vorzugsweise weist der Rückschlussring mindestens zwei Polschuhe auf, die entlang der Umfangsrichtung des Rückschlussrings an zwei beabstandeten Stellen in den Rückschlussring münden. Der zwischen diesen Stellen angeordnete Abschnitt des Rückschlussrings, bezeichnet als Segmentbereich, weist insbesondere die Wicklung mit Leiterdraht auf. Insbesondere kann der Querschnitt dieses Leiterdrahtes verschiedene Formen z.B. rund, flach oder rechteckig oder eine Kombination dieser aufweisen.

Insbesondere weist der Rückschlussring eine Anzahl N von Polschuhen und eine Anzahl N von Segmentbereichen auf. Vorzugsweise weist der Rückschlussring mindestens N Polschuhe auf, die entlang der Umfangsrichtung an jeweils beabstandeten Stellen in den Rückschlussring münden, wobei der zwischen zwei benachbarten Stellen angeordnete Abschnitt des Rückschlussrings einen Segmentbereich aufweist, der insbesondere eine Wicklung trägt. Die Polschuhe sind mit dem Rückschlussring insbesondere integral verbunden. Vorzugsweise gilt 3 <= N <= 24. Die Anzahl N beträgt vorzugsweise M ganzzahlige Vielfache von 3, also insbesondere N = M * 3, wobei M >= 1.

Eine Wicklung verläuft insbesondere toroidal um einen Segmentbereich, so dass die in radialer Richtung gelegene Innenseite (also die erste Seite des Rückschlussrings im Falle des Innenläufers; aber im Fall des Außenläufers die zweite Seite) und die in radialer Richtung gelegene Außenseite (also die zweite Seite des Rückschlussrings im Falle des Innenläufers; aber im Fall des Außenläufers die erste Seite) des Rückschlussrings von den Wicklungen bedeckt sind.

Vorzugsweise weist der Stator axial verlaufende Hohlräume, insbesondere eine Anzahl N von Hohlräumen auf, wobei ein Hohlraum begrenzt wird von einem Segmentbereich des Rückschlussrings, zwei benachbarten Polschuhen und mindestens einem Zylindermantelsegment. Das Zylindermantelsegment ist insbesondere an einem radialen Ende des Polschuhs und in axialer Richtung parallel dem Rotor angeordnet und ist insbesondere Teil des Polschuhs. Zwischen dem Zylindermantelsegment und dem Rotor befindet sich insbesondere ein Luftspalt. Dieser wird möglichst klein gehalten, um den magnetischen Widerstand zu minimieren. Das Zylindermantelsegment kann eine axial verlaufende Aussparung bzw. Öffnung aufweisen. Die Hohlräume entsprechen den bei klassischen Statoren mit Zahnbewicklung zwischen den Zähnen vorgesehenen Nuten, dort auch bezeichnet als Zahnzwischenräume. Da die Hälfte der Wicklungen aber bei der Jochwicklung außerhalb der Nuten angeordnet ist, können die Hohlräume insbesondere radial kleiner als bei klassischen Statoren mit Zahnbewicklung gebildet sein. Dadurch ist es möglich bei nahezu gleicher Baugröße den Durchmesser des Rotors zu vergrößern und somit die Leistung zu erhöhen.

Die Zähne tragen vorzugsweise keine Wicklungen. Es ist aber möglich, dass zusätzlich an mindestens einem Zahn, mehreren oder allen Zähnen eine Wicklung vorgesehen ist.

Unabhängig davon, dass bei einem erfindungsgemäßen Wicklungs- und Steuerungskonzept eines EC-Motors die Nuten bzw. die Zahnzwischenräume sehr klein sein können, ist es möglich, dass eine oder mehrerer dieser Nuten bzw. dieser Zahnzwischenräume Mittel zur Erfassung von Messwerten, insbesondere Daten, beispielsweise Rotorlage, Temperatur, etc. aufweisen. Dabei können diese Mittel beispielsweise einen oder mehrere Sensoren, insbesondere Hall-Sensoren, Wicklungen oder ähnliches umfassen. Die Steuereinrichtung ist vorzugsweise eingerichtet bzw. programmiert, den mindestens einen Messwert des mindestens einen Mittels zur Erfassung von Messwerten zu erfassen und insbesondere zur Steuerung des Motors zu verwenden.

Vorzugsweise ist der Rückschlussring aus mehreren separaten Segmentabschnitten zusammengesetzt. Vorzugsweise beinhaltet ein Segmentabschnitt mehrere Segmentbereiche oder insbesondere einen Doppelsegmentbereich bzw. Tripelsegmentbereich, der zwei Segmentbereiche bzw. drei Segmentbereiche aufweist. Eine Konstruktion des Rückschlussrings aus mehreren Segmentabschnitten bietet den Vorteil einer kompakteren und insgesamt einfacheren Bewicklung des Rückschlussrings und damit einer wirtschaftlichen Herstellung. Die separaten Segmentbereiche sind vorzugsweise formschlüssig verbindbar.

Vorzugsweise weist der Rückschlussring mehrere separate Segmentabschnitte auf, wobei jeder Segmentabschnitt einen, zwei, drei oder mehr Segmentbereiche aufweisen kann. Jeder Segmentabschnitt kann mindestens einen oder genau einen Polschuh aufweisen, der insbesondere integral mit dem Segmentabschnitt verbunden sein kann. Der Rückschlussring kann insbesondere mindestens einen Verbindungsabschnitt aufweisen, der insbesondere der Verbindung zweier in Umfangsrichtung benachbarter Segmentabschnitte dient. Der Verbindungsabschnitt kann insbesondere formschlüssig mit mindestens einem oder mit zwei Segmentabschnitten verbindbar sein.

Der Rückschlussring kann insofern aus mehreren separaten Teilen gebildet sein. Mindestens eines dieser Teile, insbesondere der Verbindungsabschnitt, kann mindestens ein Sicherungsmittel aufweisen, um die Verbindung der Teile zu sichern, insbesondere die Verbindung zweier benachbarter Teile, zum Beispiel zweier Verbindungsabschnitte bzw. eines Verbindungsabschnittes und zweier Segmentabschnitte. Ein Verbindungsmittel kann mindestens einen, insbesondere genau einen, Polschuh des Rückschlussrings aufweisen.

Das Sicherungsmittel kann insbesondere einen Schlitz im mindestens einen Verbindungsabschnitt beinhalten, der insbesondere in radialer Richtung von außen nach innen in den Verbindungsabschnitt eingebracht ist. Vorzugsweise ist mindestens ein Keilelement vorgesehen, das in einer Eingriffsposition in den Schlitz kraftschlüssig eingebracht ist, um in Umfangsrichtung eine Spannung zu erzeugen, mittels der die mehreren Teile des Rückschlussrings verstemmt werden. Das Sicherungsmittel kann alternativ mindestens ein Stiftelement, insbesondere eine Schraube beinhalten, mittels der benachbarte, insbesondere verschraubbare, Teile gesichert werden.

Das mindestens eine Keilelement kann sich entlang der axialen Richtung entlang der gesamten axialen Länge des Rückschlussrings erstrecken oder nur entlang eines Teilabschnitts der Länge des Rückschlussrings.

Ein Keilelement kann ein Rastmittel aufweisen, mittels der das Keilelement in der Eingriffsposition gesichert wird, gegen ein ungewolltes Austreten des Keilelements in radialer Richtung. Das Rastmittel kann ein Vorsprung am Keilelement sein, der in der Eingriffsposition in eine Aufnahme des Verbindungsabschnitts eingreift. Entsprechend kann das Rastmittel eine Aufnahme am Keilelement sein, in welche in der Eingriffsposition ein Vorsprung des Verbindungsabschnitts eingreift.

Vorzugsweise weist die Anordnung aus Rotor und Stator einen maximalen Radius R auf; vorzugsweise weist der Stator in radialer Richtung eine maximale Ausdehnung L auf, wobei vorzugsweise L <= f * R, wobei vorzugsweise 0,1 <= f <= 0,5, vorzugsweise 0,2 <= f <= 0,45. Die maximale Ausdehnung L des Stators in radialer Richtung ist insbesondere weniger als 0,5-Mal so groß wie der Radius R des Rotors, im Falle des Innenläufers. Dadurch kann der Rotor massereicher ausgeführt werden, um dessen Eigenschaft als Energiespeicher zu verbessern.

Vorzugsweise weisen die Polschuhe keine Bewicklung auf. Dadurch kann insbesondere deren radiale Ausdehnung minimiert werden.

Vorzugsweise ist, im Falle eines Innenläufers, der Rotor nur innerhalb des Stators vorgesehen, nicht außerhalb des Stators.

Vorzugsweise ist, im Falle eines Außenläufers, der Rotor nur außerhalb des Stators vorgesehen, nicht innerhalb des Stators.

Vorzugsweise ist die elektrische Maschine als Elektromotor ausgebildet, insbesondere EC-Motor, insbesondere als permanentmagneterregter Synchronmotor.

Vorzugsweise ist die elektrische Maschine als Innenläufer ausgebildet.

Vorzugsweise ist die elektrische Maschine als Außenläufer ausgebildet.

Die Erfindung betrifft auch ein Elektrowerkzeug, insbesondere ein handgeführtes Elektrowerkzeug, insbesondere einen Winkelschleifer oder eine Bohrmaschine, aufweisend eine erfindungsgemäße elektrische Maschine.

Die Erfindung betrifft auch ein Verfahren zur Herstellung einer erfindungsgemäßen elektrischen Maschine, aufweisend die Schritte:
* Bereitstellen des Stators, der den Rückschlussring und mehrere Polschuhe aufweist,
* Bewickeln des Rückschlussrings mit Leitungsdraht, insbesondere mit einer Anzahl N an Wicklungen,
* koaxiales Anordnen des Stators mit dem Rotor,
* Bereitstellen des Kühlmittelströmungsraums angrenzend an die zweite Seite des Rückschlussrings,
* vorzugsweise: Abdichten des Luftspaltes zwischen Stator und Rotor mit mindestens einem Abdichtmittel.

Bei diesem Verfahren ist insbesondere vorgesehen, dass der Rückschlussring aus mehreren separaten Segmentabschnitten bestehend bereitgestellt wird. Dabei ist bevorzugt, dass die Segmentabschnitte zunächst bewickelt werden, bevor sie zur Bildung des Rückschlussrings bzw. des Stators zusammengesetzt, insbesondere zusammengefügt werden. Ein solches Verfahren der Herstellung bzw. Bewicklung kann besonders wirtschaftlich ausgeführt werden.

Weitere Vorteile, Merkmale und Anwendungsmöglichkeiten der vorliegenden Erfindung ergeben sich aus der nachfolgenden Beschreibung in Zusammenhang mit den Figuren:
Fig. 1a zeigt eine schematische Frontansicht eines EC-Motors gemäß dem Stand der Technik.
Fig. 1b zeigt eine perspektivische Ansicht eines EC-Motors gemäß dem Stand der Technik.
Fig. 2a zeigt eine schematische Frontansicht eines EC-Motors gemäß dem Stand der Technik.
Fig. 2b zeigt eine schematische Frontansicht eines erfindungsgemäßen EC-Motors gemäß einem Ausführungsbeispiel.
Fig. 2c zeigt eine schematische Frontansicht eines erfindungsgemäßen EC-Motors gemäß einem Ausführungsbeispiel.
Fig. 3a zeigt eine schematische Frontansicht eines als Außenläufer gestalteten EC-Motors gemäß dem Stand der Technik.
Fig. 3b zeigt eine schematische Frontansicht eines als Außenläufer gestalteten, erfindungsgemäßen EC-Motors gemäß einem Ausführungsbeispiel.
Fig. 4 zeigt eine schematische Frontansicht des erfindungsgemäßen EC-Motors in Analogie zur Darstellung in Fig. 2c, ohne Bewicklung.
Fig. 5 zeigt eine perspektivische Anordnung eines Segmentabschnitts eines Jochs des EC-Motors der Fig. 4, mit Bewicklung.
Fig. 6 zeigt den Vergleich der elektromagnetischen Wirkung zwischen einem EC-Motor mit Zahnbewicklung gemäß Stand der Technik und einem EC-Motor mit Jochbewicklung gemäß der Erfindung, deren Phasen unterschiedlich bestromt werden.
Fig. 7 zeigt eine perspektivische Ansicht eines erfindungsgemäßen EC-Motors gemäß einem Ausführungsbeispiel, bei geöffnetem Gehäuse.
Fig. 8 zeigt einen axialen Querschnitt durch den EC-Motor der Fig. 7.
Fig. 9 zeigt einen axialen Querschnitt eines EC-Motors mit einer axialen Abdichtung.
Fig. 10 zeigt einen axialen Querschnitt eines EC-Motors mit auf der zweiten Jochseite beabstandeten Wicklungen.
Fig. 11 zeigt einen Radialschnitt des EC-Motors von Fig. 10.

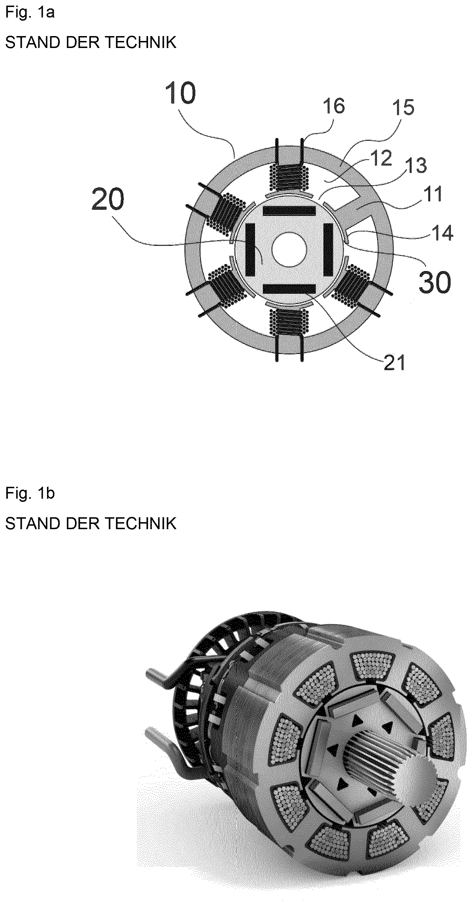

Fig. 1a zeigt eine schematische Frontansicht eines EC-Motors gemäß dem Stand der Technik. Der EC-Motor ist als Innenläufer ausgeführt: der um eine Achse rotierende Rotor 20 mit der Antriebswelle (nicht gezeigt) rotiert innerhalb des Stators 10. Der Stator 10 weist als Polschuhe dienende Zähne 11 aus einem Material hoher Permeabilität, z.B. Eisen, auf, die über den äußeren Rückschlussring 15, auch als Joch 15 bezeichnet, verbunden sind. Zwischen den Zähnen 11 sind Nuten 12 gebildet, die in Richtung Rotor 20 einen zwischen benachbarten Zahnköpfen 14 ausgebildeten Nutschlitz 13 aufweisen.

Jeder Zahn weist eine Wicklung 16 mit Kupferdraht auf. Die Schaltung der Wicklungen entspricht einem dreiphasigen System. Hier sind zwei radial gegenüberliegende Wicklungen jeweils einer Phase zugeordnet, da es sich um einen Motor mit zwei Poolpaaren und somit 6 Zähnen / Nuten handelt. Bei einem dreiphasigen Motor sind grundsätzlich Anordnungen mit einer Anzahl von Wicklungen (hier: von Zähnen) entsprechend einem Vielfachen von drei möglich. In Fig. 1a ist die Bewicklung eines der sechs Zähne nicht gezeigt, um die Geometrie des Zahns besser erkennbar zu machen.

Bei Bestromung der drei Phasen mit einem Drehstrom bildet sich ein rotierendes Magnetfeld am Motor aus. Dessen Feldlinien verlaufen im Wesentlichen im Eisenkreis, bestehend aus den Zähnen 11, dem Rückschlussring (Joch 15) und dem Rotor 20. Die Magnetfeldlinien verlaufen auch durch den magnetischen Luftspalt 30, der zwischen Rotor und Zahnköpfen ausgebildet ist und der für einen geringen magnetischen Widerstand möglichst schmal ausgebildet ist. Da die Magnetfeldlinien den Luftspalt in radialer Richtung durchlaufen, spricht man auch von einem Radialflussmotor.

Der Rotor weist vier Permanentmagnete 21 mit unterschiedlicher Polrichtung auf, wobei sich jeweils zwei Magnete gleicher Polrichtung paarweise radial gegenüberliegen.

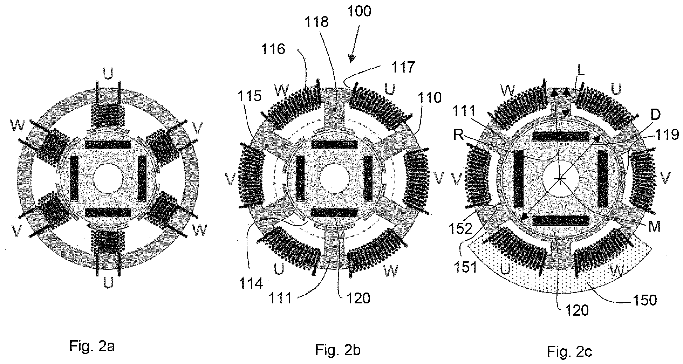

In Fig. 2a ist nochmals der bekannte EC-Motor gemäß Fig. 1a gezeigt, mit den drei Phasen u, v, w, die jeweils durch zwei radial gegenüberliegende Zähne gebildet werden.

Fig. 2b zeigt eine schematische Frontansicht eines erfindungsgemäßen EC-Motors 100 gemäß einem Ausführungsbeispiel. Der Rotor 120 ist identisch zum Rotor 20. Auch der Stator 110 ist, abgesehen von der Wicklung 16/116, identisch zum Stator 10. Anstatt die Wicklung, wie in Fig. 2a, um die Zähne zu legen, wurde die Wicklung 116 hier um das Joch 115 geführt, genauer gesagt um die zwischen den Anschlussstellen benachbarter Zähne 118 gelegenen Segmentabschnitte 117. Dadurch können die Wicklungen als toroidal bezeichnet werden, wie es bei Ringkernspulen der Fall ist.

Zudem ist in Fig. 2b die Kupferwicklung nicht in vielen Lagen auf den Zahn aufgebracht wie beispielsweise in Fig. 2a, sondern in weniger Lagen auf den Rückschlussring (das Joch) (Fig. 2b, 2c).

Ein Kühlmittelströmungsraum 150 des Motors ist in Fig. 2c nur ausschnittweise gezeigt, tatsächlich verläuft der Kühlmittelströmungsraum zylindermantelförmig als Hohlraum zwischen der zweiten Seite 152 des Rückschlussrings und einer Umhüllung des Stators, z.B. des Motorgehäuses (nicht gezeigt). Der Kühlmittelströmungsraum 150 verläuft in axialer Richtung entlang einer zweiten Seite 152 des Rückschlussrings, welche der ersten Seite 151 des Rückschlussrings gegenüberliegt. Die erste Seite 151 des Rückschlussrings liegt hier radial nach innen weisend, die zweite Seite 152 radial nach außen weisend. Die Wicklungen 116 sind jeweils um einen axial verlaufenden Segmentbereich eines Segmentabschnitts 117 des Rückschlussrings gewickelt und in den Kühlmittelströmungsraum 150. Dadurch werden die Wicklungen effizient und unmittelbar durch das im Kühlmittelströmungsraum in axialer Richtung strömende Kühlmittel, hier Luft, gekühlt.

Fig. 2c zeigt eine Anordnung, die im Wesentlichen der Anordnung der Fig. 2b entspricht, wobei der durch die Verlagerung der Wicklung von den Zähnen auf das Joch 115 gewonnene Raum innerhalb des Jochs 115 dazu genutzt wurde, den Durchmesser D des Rotors 120 zu erhöhen und die radiale Länge der Zähne 118 auf ein Minimum zu verkürzen. Zudem wurden die Nutschlitze weggelassen und die Zähne 118 radial innen verbunden, so dass sich eine radial geschlossene Hülse 119 für den Motor ergibt.

Die mögliche Erhöhung des Außendurchmessers des Rotors bietet zudem die Möglichkeit, den Innendurchmesser des Rotors bzw. den Außendurchmesser der Welle (nicht gezeigt), die mit dem Rotor verbunden ist, ebenfalls zu vergrößern. Dadurch kann die Stabilität der Welle erhöht werden. Zusätzlich bietet der vergrößerte Innendurchmesser des Rotors die Möglichkeit isolierte bzw. beschichtete Antriebswellen zu verwenden.

Durch die erfindungsgemäßen Anordnungen wird eine Vielzahl von Parametern positiv beeinflusst.

Der meist nur als magnetisch notwendig betrachtete Rückschlussring 115 am äußeren Umfang des Motors führt den gesamten magnetischen Fluss und wird erfindungsgemäß zum Ort der Bewicklung 116. Dadurch können die Zähne 118 radial kleiner und damit der Abstand des magnetischen Luftspalts 130 vom Mittelpunkt M der Achse vergrößert werden, und somit kann der Durchmesser D des Luftspalts 130 größer gewählt werden. Die Anordnung aus Rotor und Stator weist einen maximalen Radius R auf und der Rotor einen maximalen Durchmesser D, wobei hier ca. D = 1,4 * R. Der Rotor 120 ist in Fig. 2c deshalb besonders massereich ausgestaltet.

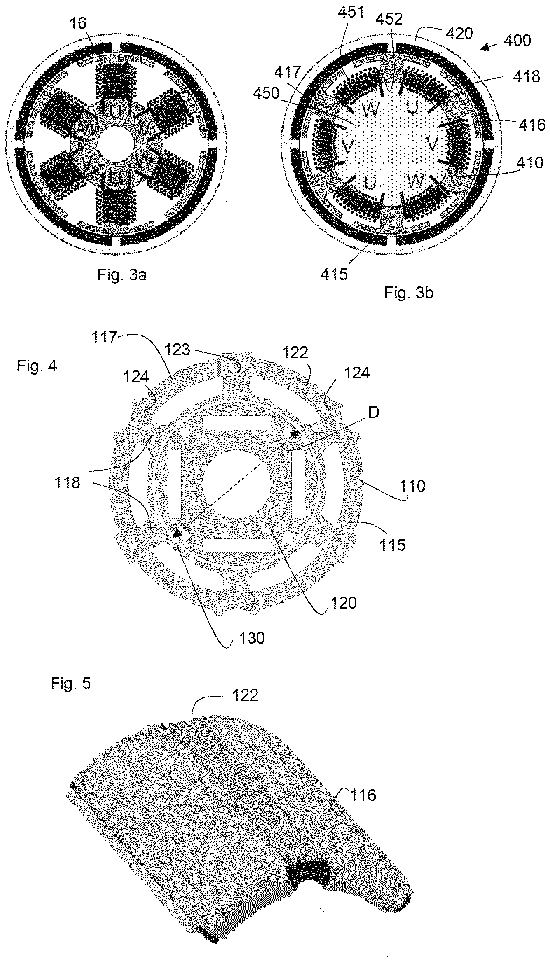

Da die erfindungsgemäße Bewicklung des Rückschlussringes 115 eine toroidale Wicklung 116 ist, kann der Stator aus Segmenten bzw. Segmentabschnitten gebildet sein und diese Segmentabschnitte 117 können unabhängig voneinander einzeln bewickelt werden. Beispielsweise ist ein Stator 110 mit 3 Segmentabschnitten 117 in Figur 4 gezeigt. Dadurch ist eine präzise und wirtschaftliche Einzelsegmentbewicklung einzelner Segmentabschnitte 117 möglich.

Fig. 3a zeigt eine schematische Frontansicht eines als Außenläufer gestalteten EC-Motors gemäß dem Stand der Technik, mit Zahnbewicklung.

Fig. 3b zeigt eine schematische Frontansicht eines als Außenläufer gestalteten, erfindungsgemäßen EC-Motors 400 gemäß einem Ausführungsbeispiel. Der Motor 400 weist den Stator 410 auf, um den außen umlaufend der Rotor (Außenläufer) 420 rotiert. Der innen gelegene Stator weist einen axial konzentrisch umlaufenden Rückschlussring 415 (Joch 415; genauer: Rückschlusshohlzylinder 415) auf, von dem sich die Zähne 418 des Rückschlussrings 415 radial nach außen erstrecken. Die Wicklung 416 befindet sich auch hier gewickelt um die Segmentabschnitte 417 des Jochs 415, während die Zähne auch hier gekürzt und nicht bewickelt sind.

Auch in Fig. 3b ist ein Kühlmittelströmungsraum 450 des Motors gezeigt. Der Kühlmittelströmungsraum 450 verläuft in axialer Richtung entlang einer zweiten Seite 452 des Rückschlussrings, welche der ersten Seite 451 des Rückschlussrings gegenüberliegt. Die erste Seite 451 des Rückschlussrings liegt hier radial nach außen weisend, die zweite Seite 452 radial nach innen weisend. Die Wicklungen 416 sind jeweils um einen axial verlaufenden Segmentabschnitt 417 des Rückschlussrings gewickelt und reichen bis in den Kühlmittelströmungsraum 450. Dadurch werden die Wicklungen effizient und unmittelbar durch das im Kühlmittelströmungsraum in axialer Richtung strömende Kühlmittel, hier Luft, gekühlt.

Fig. 4 zeigt die Draufsicht eines sogenannten Blechschnitts. Aus einer Vielzahl von einzelnen Blechen wird der Stator bzw. der Rotor gebildet, um die nachteilige Wirkung von Wirbelströmen zu begrenzen.

In Fig. 4 ist gezeigt, dass bei einer geraden Anzahl von Zähnen / Nuten die Einzelzahnbewicklung auch vorteilhaft durch eine Bewicklung von Doppelsegmentabschnitten 122 ausgeführt werden kann. Ein solcher Doppelsegmentabschnitt 122 ist ein Segmentabschnitt mit zwei jeweils für eine Wicklung vorgesehenen Segmentbereichen. Der in Fig. 4 gezeigte unbewickelte Stator 110 weist ein Joch 115 auf, das aus drei Doppelsegmentabschnitten 122 besteht. Ein Doppelsegmentabschnitt 122 liegt jeweils zentral auf einer radial außen gelegenen Kontaktstelle 123 eines Zahns 118 auf und ist an seinen Enden jeweils an einer Anschlussstelle 124 mit einem benachbarten Zahn 118 verbunden. Alle Zähne 118 werden vorzugsweise gemeinsam durch einen festen inneren Blechschnitt gebildet. Bei einer ungeraden Anzahl von Zähnen / Nuten kann eine Einzelzahnbewicklung in ähnlicher Form durch Tripelsegmentabschnitte erfolgen.

In Fig. 5 ist beispielhaft ein bewickelter Doppelsegmentabschnitt 122 zu sehen. Mit 2 Lagen der Wicklung 116 werden mehr Amperewindungen erreicht als bei der Zahnbewicklung 16 mit 4 Lagen (Figur 3a), wodurch auch eine bessere Kühlung der inneren Kupferlage(n) möglich ist.

Der feste Teil des Blechschnittes 118 sorgt sowohl für eine konzentrische Anordnung der Einzelzähne mit der Möglichkeit der Zentrierung von Lagerschilden als auch für eine übergangslose Abdichtung des magnetischen Luftspaltes. Er reduziert auch das Nutrastmoment des EC-Motors.

Der durch den vergrößerten Luftspaltdurchmesser größere Rotor 120 ermöglicht eine mit dem Quadrat des Durchmessers D zunehmende mechanische Energiespeicherung zur Glättung der Drehzahl bei Lastspitzen und aufgrund von Ansteuerungslücken z.B. bei Netzmaschinen mit schlankem Zwischenkreis (AC Ripple). Sollten kurze Bremszeiten das Kriterium sein, kann der Rotor natürlich durch einen größeren Kunststoffkern oder durch Öffnungen im Blechschnitt auch mit geringerer Rotationsträgheit ausgeführt werden.

Der größere Luftspaltdurchmesser D führt auch zu einer höheren Drehmoment-konstante. Diese wird in der hier bevorzugten Leistungsklasse zumeist in mNm / A angegeben und hat Einfluss auf die Dauerleistung und den Wirkungsgrad des Motors.

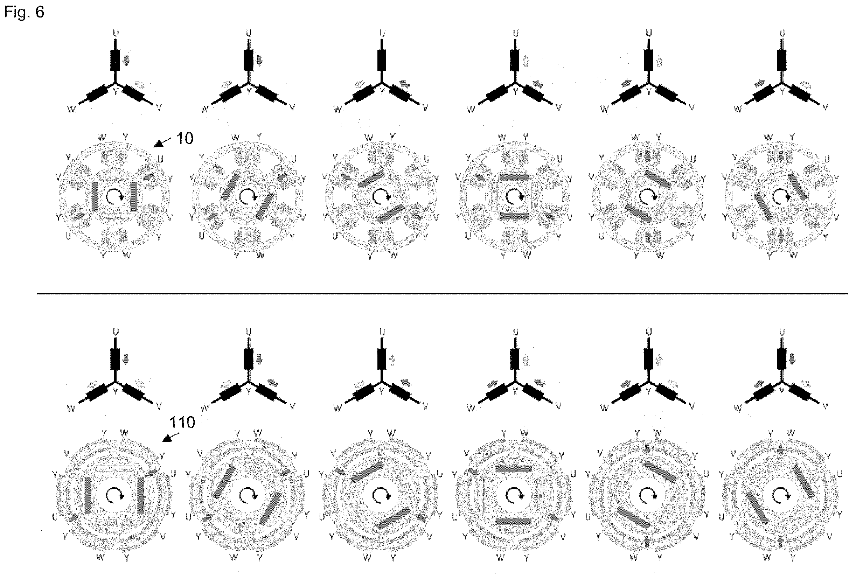

Fig. 6 zeigt, die elektromagnetische Wirkung, die ein herkömmlich bewickelter Stator 10 (Fig. 2a) erzeugt, wenn zwei seiner Phasen im Wechsel bestromt werden. Parallel dazu ist gezeigt, wie der erfindungsgemäße Stator 110 bestromt werden muss, um die gleiche elektromagnetische Wirkung zu erzielen: diese ist anhand des erzeugten magnetischen Flusses in Relation zur Position der rotierenden Permanentmagnete gezeigt. Es ergibt sich, dass für eine identische elektromagnetische Wirkung die Ansteuerung der Motorphasen gemäß Fig. 6 geändert werden sollte.

Zur vollständigen Abdichtung des magnetischen Luftspaltes wird als bevorzugtes Ausgestaltungsmerkmal vorgesehen, die Lagerschilde des Motors bzw. auch Endkappen ohne Kugellager so mit dem festen Teil des Stator-Blechschnittes zu verbinden, dass die stirnseitigen Öffnungen des magnetischen Luftspaltes verschlossen werden, wie in Fig. 2c im Vergleich mit Fig. 2b zu sehen ist. Damit und durch die fehlenden Nutschlitze 114 kann kein Staub in den magnetischen Luftspalt eindringen und diesen festsetzen.

Gleichzeitig können die Lagerschilde zum Luftspalt zentriert werden. Für einen selbsttragenden Motor kann das für beide Lagerseiten genutzt werden.

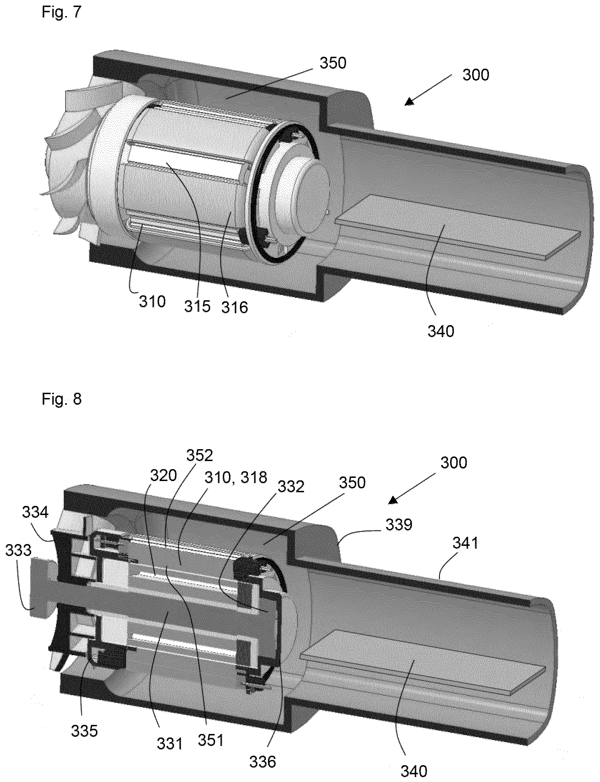

Fig. 7 und Fig. 8 zeigen den erfindungsgemäßen EC-Motor 300, der einen Stator 310 mit Wicklungen 316 um ein Joch herum aufweist, die um Segmentabschnitte gewickelt sind, während die Zähne 318 nicht bewickelt sind. Die Motorelektronik 340 erstreckt sich in axialer Richtung vom Innenraum des Motorgehäuses 339 in den Handgriffbereich 341 hinein.

Der Motor 300 weist einen Rotor 320 auf, in dem die Antriebswelle 331 fixiert ist.

Für den Antrieb 300 wird nur das hintere Lager 332 (B-Seite) am Stator zentriert und A-seitig wird die Welle 331 über das Kugellager 333 in einem zum Motorgehäuse 339 zentrierten Getriebekopf (nicht gezeigt) aufgenommen. Damit auch dort eine Zentrierung zum Luftspalt entsteht, wird der Stator 310 durch das Werkzeuggehäuse 339 entsprechend aufgenommen und zentriert.

Das an einem Ende des Stators/Rotors bzw. des Motors angeordnete Deckelelement 335 und das am anderen Ende angeordnete Deckelelement bzw. Lagerschild 336 bilden Abdichtmittel und kapseln den innerhalb des Jochs 315 gelegenen Motorbereich in axialer Richtung derart ab, dass kein Staub in diesen Motorbereich gelangen kann. Gleichzeitig liegen die zweite Seite 352 des Jochs 315 und die Wicklung 316 unmittelbar im luftgekühlten Kühlmittelströmungsraum 350, hier der Zwischenraum 350 zwischen Motor und Motorgehäuse, in dem der durch den Ventilator 334 erzeugte Luftstrom in axialer Richtung eine optimale Kühlwirkung entfaltet.

Eine vorteilhafte Art, die Motorwicklungen zu verschalten, ist die Verwendung von Schneid-Klemm-Kontakten, welche ihrerseits mittels einer Leiterplatte zu einer der 4 Verschaltungsarten (für dreiphasige Systeme: Stern o. Dreieck und Reihe o. Parallel) verbunden werden.

Bekannte BLDC Motoren (EC-Motoren) haben einen Außendurchmesser des Stators von 48mm. Vollgekapselte Motoren, bei denen der Stator ebenfalls komplett gekapselt ist, bauen jedoch mit ihren Lagerschilden aus Alu-Druckguss auf, welche auch einen relevanten Kostenfaktor darstellen. Es werden dort maximale Außendurchmesser von 58mm erreicht. Mit der vorliegenden Erfindung kann dieser Unterschied im Durchmesser entweder für einen größeren Motor mit mehr Leistung oder für den Abtransport von Staub oder für ein geringeres Umgreifmaß verwendet werden.

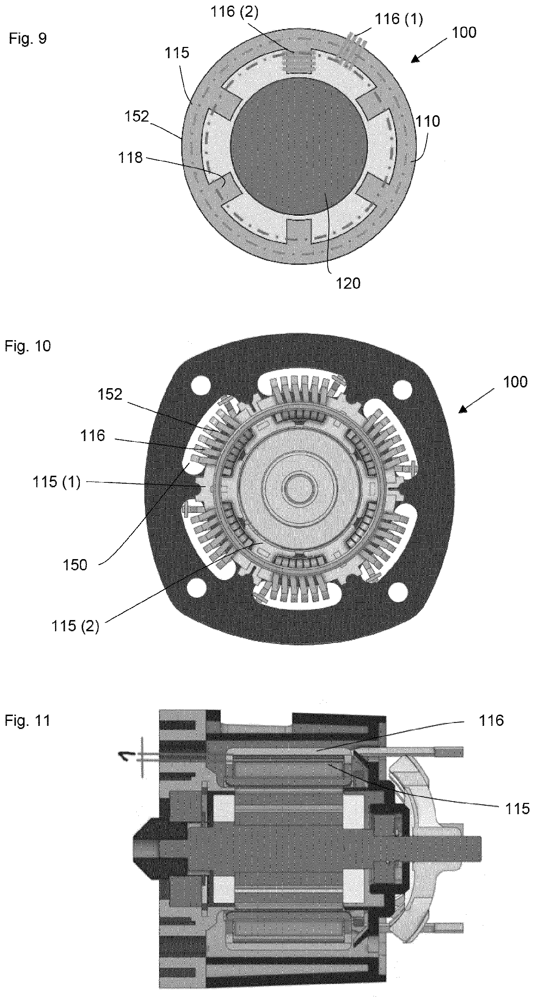

Fig. 9 skizziert eine axiale Abdichtung des gesamten Innenraumes inklusive des magnetischen Luftspaltes. Die Abdichtung des magnetischen Luftspalts soll hier zwei Anforderungen erfüllen: Erstens sollte ein möglichst großer Teil der Kupferwicklung 116 mit dem Kühlmittel in Kontakt kommen, um eine optimale Wärmeabfuhr zu gewährleisten. Zweitens soll der magnetische Luftspalt hermetisch abgedichtet werden, um die Funktionalität des Systems sicherzustellen.

Für die Wicklung 116 (1) am Joch 115 werden beide Anforderungen durch eine Abdichtkontur, dargestellt durch die äußere der beiden Strichpunktlinien, erfüllt. Mindestens die Hälfte der Wicklung 116 (1) ist dabei im Kühlluftstrom angeordnet, während die Abdichtung vollständig als in axialer Richtung auf den Motor aufgesetzter Deckel gebildet sein kann, also im Wesentlichen flächig und zweidimensional auf der Stirnseite des Motors aufliegen kann. Diese Bauweise gewährleistet eine hohe Fertigungsgenauigkeit, da die Wicklung 116 (1) an den axialen Wickelköpfen nur geringfügig aufträgt.

Demgegenüber kann bei einer nicht beanspruchten Zahnwicklung 116 (2) eine geeignete Abdichtkontur nur unter erheblicherem Aufwand realisiert werden. Die Abdichtung, angedeutet durch die innere der beiden Strichpunktlinien, wird nur durch eine Kombination aus axialen und dreidimensionalen Dichtmaßnahmen ermöglicht. Erst dadurch kann erreicht werden, dass sowohl ein erheblicher Anteil der Kupferwicklung Wicklung 116 (2) mit dem Kühlmittel in Kontakt kommt als auch der magnetische Luftspalt vollständig abgedichtet bleibt.

Fig. 10 zeigt einen Axialschnitt eines EC-Motors gemäß der zweiten beanspruchten Ausführungsform mit einem vorzugsweise mehrteiligen Rückschlussring sowie in den Kühlmittelströmungsraum 150 hineinragenden Wicklungen 116. In dem gezeigten Ausführungsbeispiel umfasst der Rückschlussring jeweils drei im Wesentlichen baugleiche Teile 115 (1) und 115 (2), welche abwechselnd angeordnet den Rückschlussring bilden. Die Teile der Gruppe 115 (2), jeweils auch bezeichnet als Verbindungsabschnitt des Rückschlussrings, weisen ferner an ihren radial außen gelegenen Enden jeweils einen Schlitz auf, sodass in diesen Schlitz ein Keil (nicht gezeigt) einbringbar ist, um den Stator zu verstemmen. Auf diese Weise wird eine bereits formschlüssig ausgebildete Verbindung benachbarter Bestandteile des Rückschlussrings weiter gesichert.

Ferner zeigt Fig. 10, dass die Wicklungen 116 in den Kühlmittelströmungsraum 150 hineinragen und von der zweiten Seite 152 des Rückschlussrings, 115 (1) und 115 (2), in radialer Richtung beabstandet sind.

Durch diese Anordnung wird eine effizientere Kühlung der Wicklungen 116 durch den vorbeifließenden Luftstrom im Kühlmittelströmungsraum 150 erreicht, was zu einer besseren Wärmeabfuhr der in den Wicklungen 116 entstehenden Verluste führt. Gleichzeitig profitiert auch das verlustbehaftete Eisen des Rückschlussrings von einer optimierten Kühlung, da der Luftstrom aufgrund der räumlichen Trennung zwischen den Wicklungen 116 und dem Rückschlussring ungehindert zirkulieren kann und somit die Wärme vom Rückschlussring abführt.

Diese Konstruktion stellt sicher, dass sowohl die Wicklungen 116 als auch der Rückschlussring durch eine verbesserte Luftkühlung profitieren. Der Abstand zwischen dem äußeren Rand des Rückschlussrings an der zweiten Seite 152 und der Wicklungen 116 ermöglicht es dem Luftstrom im Kühlmittelströmungsraum 150, den Rückschlussring zu umströmen und dabei die im Eisen des Rückschlussrings entstehende Wärme abzuführen.

In der gezeigten Ausführungsform sind die Wicklungen 116 im Außenbereich so gestaltet, dass sie aufgespreizt bzw. aufgefächert sind, wodurch zwischen den einzelnen Wickeldrähten ein definierter Abstand entsteht. Durch die Aufspreizung der Wicklungen 116 wird eine größere Oberfläche geschaffen, an der der vorbeiströmende Luftstrom entlangströmen kann. Diese vergrößerte Oberfläche ermöglicht eine effizientere Wärmeabgabe, da der Luftstrom die entstehende Wärme besser von den Wicklungsdrähten ableiten kann.

Die Aufspreizung sorgt zudem dafür, dass der Luftstrom im Kühlmittelströmungsraum 150 tiefer in die Wicklungen 116 eindringen kann und so eine intensivere Kühlung erreicht wird. Der Abstand zwischen den Wickeldrähten bewirkt außerdem, dass die Drähte in radialer Richtung in einem bestimmten Winkel zueinander angeordnet sind. Dies führt nicht nur zu einer besseren Verteilung des Luftstroms im Kühlmittelströmungsraum 150 über die gesamte Wicklung 116, sondern auch zu einer gleichmäßigen Kühlung der Drähte. Der radiale Winkel der Wicklungsdrähte 116 trägt dazu bei, dass die Wärmeentwicklung gleichmäßig verteilt wird und sich nicht an einzelnen Stellen konzentriert.

Fig. 11 zeigt das Ausführungsbeispiel von Fig. 10, wobei der Abstand von Wicklung 116 und zweiter Seite des Rückschlussrings 115 hier 1 mm beträgt. Hierdurch wird ein ausreichender Luftdurchsatz und damit eine optimale Kühlung gewährleistet. Ein solcher Abstand sorgt ferner dafür, dass die Kühlung gleichmäßig verteilt wird und sowohl die Wicklung 116 als auch der Rückschlussring 115 von einer verbesserten thermischen Entlastung profitieren.

### Bezugszeichenliste

| | |
|---|---|
| 10 | Stator |
| 11, | Zähne |
| 12 | Nuten |
| 13 | Nutschlitz |
| | |
| 15 | Joch, Rückschlussring |
| 16 | Wicklung |
| 20 | Rotor |
| 21 | Permanentmagnete |
| | |
| 30 | Luftspalt |
| | |
| 100, 200, 300 400 | Motor |
| 110, 210, 310, 410 | Stator |
| 130 | Luftspalt |
| 114 | Nutschlitze |
| 115, 215, 315, 415 | Joch, Rückschlussring |
| 116, 216, 316, 416 | Wicklung |
| 117, 417 | Segmentabschnitt |
| 118, 218, 318, 418 | Zähne, Polschuhe |
| 119 | Hülse |
| 120, 320 | Rotor |
| 122 | Doppelsegmentabschnitt |
| 123 | Kontaktstelle |
| 124 | Anschlussstelle |
| 150, 350, 450 | Kühlmittelströmungsraum |
| 151, 351, 451 | Erste Seite des Rückschlussrings |
| 152, 352, 452 | Zweite Seite des Rückschlussrings |
| 331 | Antriebswelle |
| 332 | Lager |
| 333 | Kugellager |
| 334 | Ventilator |
| 335, 336 | Deckelelement, Lagerschild |
| | |
| 339 | Motorgehäuse |
| 340 | Ansteuerelektronik |
| 341 | Handgriffbereich |
| | |
| | |
| 420 | Rotor, Außenläufer |
| | |
| D | Durchmesser Luftspalt |
| | |
| M | Mittelpunkt von 331 |
| R | Radius Stator |
| A | Stator Dicke |

## Patentansprüche

1. Elektrische Maschine, insbesondere EC-Motor, aufweisend
einen Stator (110; 210; 310; 410), mit einem um eine axiale Richtung A konzentrisch umlaufenden magnetischen Rückschlussring (115; 215; 315; 415), der an einer konzentrisch verlaufenden ersten Seite (151; 351; 451) mehrere Polschuhe (118; 218; 318; 418) aufweist, die einen konzentrisch verlaufenden, zylinder- oder hohlzylinderförmigen Rotoraufnahmeraum begrenzen,
einen Rotor (120, 320), der konzentrisch zum Stator im Rotoraufnahmeraum angeordnet ist,
die elektrische Maschine einen Kühlmittelströmungsraum (150; 350; 450) aufweist, der in axialer Richtung entlang einer zweiten Seite (152; 352; 452) des Rückschlussrings verläuft, welche der ersten Seite (151; 351; 451) gegenüberliegt, und
der Stator (110; 210; 310; 410), mehrere, einen Leiterdraht aufweisende Wicklungen (116; 216; 316; 416) aufweist, die jeweils um einen axial verlaufenden Segmentabschnitt (117; 417) des Rückschlussrings (115; 215; 315; 415) gewickelt sind und die an den Kühlmittelströmungsraum (150; 350; 450) angrenzen,
**dadurch gekennzeichnet, dass**
zwischen den Polschuhen (118; 218; 318; 418) und dem Rotor (120, 320) ein Luftspalt (130) ausgebildet ist, und wobei die elektrische Maschine mindestens ein Abdichtmittel (335, 336) zum Abdichten des Luftspaltes aufweist.

2. Elektrische Maschine, mit einem EC-Motor, aufweisend
einen Stator (110; 210; 310; 410), mit einem um eine axiale Richtung A konzentrisch umlaufenden magnetischen Rückschlussring (115; 215; 315; 415), der an einer konzentrisch verlaufenden ersten Seite (151; 351; 451) mehrere Polschuhe (118; 218; 318; 418) aufweist, die einen konzentrisch verlaufenden, zylinder- oder hohlzylinderförmigen Rotoraufnahmeraum begrenzen,
einen Rotor (120, 320), der konzentrisch zum Stator im Rotoraufnahmeraum angeordnet ist,
die elektrische Maschine einen Kühlmittelströmungsraum (150; 350; 450) aufweist, der in axialer Richtung entlang einer zweiten Seite (152; 352; 452) des Rückschlussrings verläuft, welche der ersten Seite (151; 351; 451) gegenüberliegt, und
der Stator (110; 210; 310; 410), mehrere, einen Leiterdraht aufweisende Wicklungen (116; 216; 316; 416) aufweist, die jeweils um einen axial verlaufenden Segmentabschnitt (117; 417) des Rückschlussrings (115; 215; 315; 415) gewickelt sind und die an den Kühlmittelströmungsraum (150; 350; 450) angrenzen,
**dadurch gekennzeichnet, dass**
die Wicklungen (116; 216; 316; 416) in den Kühlmittelströmungsraum (150; 350; 450) hineinragen und von der zweiten Seite (152; 352; 452) des Rückschlussrings in radialer Richtung beabstandet sind.

3. Elektrische Maschine gemäß Anspruch 2, **dadurch gekennzeichnet, dass** die Wicklungen (116; 216; 316; 416) aufgespreizt sind, sodass zwischen einzelnen Wicklungsdrähten ein Abstand vorliegt.

4. Elektrische Maschine gemäß Anspruch 1 bis 3, **dadurch gekennzeichnet, dass** der Rotor wenigstens einen oder mehrere Permanentmagnete umfasst.

5. Elektrische Maschine gemäß Anspruch 1 bis 4, die als Innenläufer ausgebildet ist, wobei der Kühlmittelströmungsraum zwischen einer Umhüllung, insbesondere einem Gehäuse (339), der elektrischen Maschine, und der zweiten Seite des Rückschlussrings ausgebildet ist.

6. Elektrische Maschine gemäß Anspruch 1 bis 4, die als Außenläufer ausgebildet ist, wobei der Kühlmittelströmungsraum im zylinderförmigen Hohlraum des Stators ausgebildet ist.

7. Elektrische Maschine gemäß einem der vorherigen Ansprüche, wobei der Rückschlussring mindestens zwei Polschuhe aufweist, die entlang der Umfangsrichtung des Rückschlussrings an zwei beabstandeten Stellen in den Rückschlussring münden, wobei der zwischen diesen Stellen angeordnete Abschnitt des Rückschlussrings diesen Segmentbereich aufweist.

8. Elektrische Maschine gemäß einem der vorherigen Ansprüche, wobei der Rückschlussring aus mehreren separaten Segmentabschnitten (117, 417) zusammengesetzt ist.

9. Elektrische Maschine gemäß Anspruch 8, wobei ein Segmentabschnitt mehrere Segmentbereiche beinhaltet, insbesondere indem ein Doppelsegmentabschnitt (122) zwei Segmentbereiche aufweist, wobei um jeden Segmentbereich herum eine Wicklung vorgesehen ist.

10. Elektrische Maschine gemäß einem der vorherigen Ansprüche, wobei die Anordnung aus Rotor und Stator einen maximalen Radius R aufweist und wobei der Stator in radialer Richtung eine maximale Ausdehnung L aufweist, wobei L <= f * R, wobei vorzugsweise 0,1 <= f <= 0,5, vorzugsweise 0,2 <= f <= 0,45.

11. Elektrische Maschine gemäß einem der vorherigen Ansprüche, wobei die Polschuhe keine Bewicklung aufweisen.

12. Elektrische Maschine gemäß einem der vorherigen Ansprüche, die als Elektromotor ausgebildet ist, insbesondere EC-Motor, insbesondere als permanentmagneterregter Synchronmotor.

13. Elektrische Maschine gemäß einem der Ansprüche 1 bis 12, die als Innenläufer ausgebildet ist.

14. Elektrische Maschine gemäß einem der Ansprüche 1 bis 12, die als Außenläufer ausgebildet ist.

15. Verfahren zur Herstellung einer elektrischen Maschine gemäß einem der Ansprüche 1 bis 14, aufweisend die Schritte:
* Bereitstellen des Stators, der den Rückschlussring und mehrere Polschuhe aufweist,
* Bewickeln des Rückschlussrings mit Leitungsdraht,
* koaxiales Anordnen des Stators mit dem Rotor,
* Bereitstellen des Kühlmittelströmungsraums angrenzend an die zweite Seite des Rückschlussrings.
